# EUROPÄISCHE PATENTANMELDUNG

(11) **EP 4 571 124 A1**
(43) Veröffentlichungstag der Anmeldung: **18.06.2025**
(21) Anmeldenummer: 24220002.0
(22) Anmeldetag: 13.12.2024
(51) Int. Cl.: F16B 2/22, F16B 45/00

(54) **PNEUMATIKTRÄGERHALTEKLAMMER**

(30) Priorität: 14.12.2023 DE 102023135229
(71) Anmelder: Smart Industrieservice UG (haftungsbeschränkt), 41836 Hückelhoven (DE)
(72) Erfinder: Schmitz, Christoph, 41836 Hückelhoven (DE); Pohl, Beate, 41836 Hückelhoven (DE)
(74) Vertreter: Reuther, Martin

(57) **Zusammenfassung**

Durch eine Pneumatikträgerhalteklammer (10) kann ein Befestigen von Gegenständen an einer pneumatischen Tragekonstruktion bzw. innerhalb von Zelten mit einer pneumatischen Tragekonstruktion ermöglicht werden, insoweit die Pneumatikträgerhalteklammer (10) an der pneumatischen Tragekonstruktion bzw. an einem entsprechenden Pneumatikträger bzw. pneumatischen Träger festgeklammert werden kann, um auf diese Weise dann Gegenstände an der pneumatischen Tragekonstruktion bzw. innerhalb von Zelten mit einer pneumatischen Tragekonstruktion zu befestigen, wobei die Pneumatikträgerhalteklammer (10) eine Haltestruktur (20) umfasst, die zwei stetig gekrümmte, aufeinander zu weisende Halteflächen (21) aufweist mit zwei Enden (22), die federnd gegeneinander verlagerbar sind.

## Beschreibung

Die Erfindung betrifft eine Pneumatikträgerhalteklammer zur Befestigung von Gegenständen an einem Pneumatikträger bzw. pneumatischen Träger bzw. an einer pneumatischen Tragkonstruktion beispielsweise eines Vorzelts.

Zum Befestigen von Gegenständen an Profilen sind zangenartige, zwei Halteflächen an Backen aufweisende Anordnungen, deren Betätigungsschenkel als Haken, beispielsweise für das Aufhängen von Kleidungsstücken o.ä., ausgebildet und mittels einer auf Druck beanspruchter Spreizfeder zusammengedruckt werden, so dass diese mit Profilen, wie beispielsweise mit Zeltmasten verbunden werden können, aus der DE 17 22 827 U bekannt. Auch die CN 2634026 Y offenbart einen Doppelhaken, der an Stangen bzw. Profilen angebracht werden kann.

Andererseits offenbart die US 3,604,685 pneumatische Tröger, an welchen starre Wandpaneele angebracht werden sollen, wobei diese Wandpaneele unter anderem auch ösenartige Ausnehmungen aufweisen können, in welche die pneumatischen Träger zunächst eingelegt und dann durch Befüllen gesichert werden können. Pneumatische Träger sind auch aus der US 2005/0081471 A bekannt, wobei auch in dieser Druckschrift zu verbindende Paneele offenbart sind.

Zelte mit einer pneumatischen Tragkonstruktion bzw. mit wenigstens einem Pneumatikträger sind andererseits beispielsweise aus der DE 198 42 887 A1 oder aus der US 2019/0357645 Albekannt und erfreuen sich, beispielsweise wegen ihres geringen Gewichts und dem geringen Aufwand bei deren Aufbau und Abbau, insbesondere auch als Vorzelte, steigender Beliebtheit.

Es ist Aufgabe vorliegender Erfindung, ein Befestigen von Gegenständen innerhalb derartiger Zelte oder an anderen pneumatischen Tragekonstruktionen zu ermöglichen.

Die Aufgabe der Erfindung wird durch Pneumatikträgerhalteklammem mit den Merkmalen der unabhängigen Ansprüche gelöst. Weitere, ggf. auch unabhängig hiervon, vorteilhafte Ausgestaltungen finden sich in den Unteransprüchen sowie der nachfolgenden Beschreibung.

Hierbei geht die Erfindung von der Grunderkenntnis aus, dass durch eine Pneumatikträgerhalteklammer ein Befestigen von Gegenständen an einer pneumatischen Tragekonstruktion bzw. innerhalb von Zelten mit einer pneumatischen Tragekonstruktion ermöglicht werden kann, insoweit die Pneumatikträgerhalteklammer an der pneumatischen Tragekonstruktion bzw. an einem entsprechenden Pneumatikträger bzw. pneumatischen Träger festgeklammert werden kann, um auf diese Weise dann Gegenstände an der pneumatischen Tragekonstruktion bzw. innerhalb von Zelten mit einer pneumatischen Tragekonstruktion zu befestigen.

Hierbei kann die Pneumatikträgerhalteklammer zur Befestigung von Gegenständen an einem Pneumatikträger eine Haltestruktur umfassen, die zwei stetig gekrümmte, aufeinander zuweisende und an einer Innenseite der Haltestruktur angeordneten Halteflächen aufweist, wobei die beiden Halteflächen jeweils mit einer Komponente senkrecht zu einer Klammerebene ausgerichtet sind, wobei die Krümmung beider Halteflächen einen von der jeweiligen Haltefläche wegweisenden Krümmungsradius aufweist und wobei die Haltestruktur zwei Enden aufweist, die federnd gegeneinander verlagerbar sind. Eine derartig ausgestaltete Pneumatikträgerhalteklammer kann mit ihren Halteflächen an einem Pneumatikträger bzw. pneumatischem Träger befestigt werden, indem die federnden Enden voneinander entfernt werden, sodass die Pneumatikträgerhalteklammer über einen Pneumatikträger geschoben und anschließend, wenn die beiden federnd gegeneinander verlagerbaren Enden wenigstens teilweise entspannen, mit dem Halteflächen an dem Pneumatikträger festgeklammert werden bzw. sich festklammern kann, sodass an der Pneumatikträgerhalteklammer Gegenstände entweder befestigt werden oder bereits mit dieser verbunden sein können, um diese über die Pneumatikträgerhalteklammer an dem Pneumatikträger bzw. an dem Pneumatikträger umfassenden Tragekonstruktion oder innerhalb eines Zeltes mit einer pneumatischen Tragekonstruktion zu befestigen.

Pneumatikträger bzw. pneumatische Träger sind vorzugsweise durch einen erhöhten Innendruck in sich stabilisiert. Aufgrund des allseitig nach außen wirkenden Innendruckes weisen derartige Pneumatikträger in der Regel einen abgerundeten oder sogar kreisförmigen Querschnitt auf, welcher gegebenenfalls durch Nähte, beispielsweise in Ansatzbereichen von Zeltbahnen oder auch an Kreuzungen von zwei oder mehr Pneumatikträger, Absetzungen oder sonstige Strukturen aufweisen können. Der Vorteil, dass entsprechenden Pneumatikträger und hieraus gebildete Tragekonstruktion verhältnismäßig auf- und abzubauen sind, geht jedoch in der Regel mit einer gewissen Empfindlichkeit derartigen Tragekonstruktionen gegen punktuelle Belastungen und insbesondere gegen Beschädigungen der jeweiligen Hüllen dieser Pneumatikträger und Tragekonstruktionen, innerhalb derer der zugehörige Innendruck aufgebaut wird, einher.

Durch eine Krümmung der beiden Halteflächen um einen Krümmungsradius, welcher von der jeweiligen Haltefläche weg weist, welcher also insbesondere außerhalb der die Halteflächen bereitstellenden Haltestruktur liegt, ergibt sich ein konvexe Krümmung der Halteflächen, welcher der natürlichen Form der Pneumatikträger, welche diese aufgrund ihres allseitig nach außen wirkenden Innendrucks bevorzugt einnehmen und welche im wesentlich als konkav anzusehen ist, im Wesentlichen folgen kann, sodass allzu starke Eingriffe in die durch den Innendruck der Pneumatikträger bedingte Stabilität derselben auf ein Minimum reduziert werden können.

Insbesondere durch die stetige Krümmung der beiden Halteflächen kann eine hohe punktuelle Belastung der Pneumatikträger durch die Haltestruktur bzw. durch die Pneumatikträgerhalteklammer an den jeweiligen Pneumatikträgem auf ein Minimum reduziert werden.

In diesem Zusammenhang sei betont, dass eine stetige Krümmung vorzugsweise einen Krümmungsradius nicht unter 5 mm beinhaltet. Krümmungsradien unterhalb von 5 mm werden in vorliegendem Zusammenhang unstetig angesehen und können beispielsweise in konkaver Form an den federnd gegeneinander verlagerbaren Enden zu finden sein, an welchen andererseits davon auszugehen ist, dass die jeweiligen Eingriffe, die durch eine derartige unstetige Krümmung, insbesondere wenn diese konkav ist, an die Pneumatikträger unerwünschte Beeinträchtigung der Eigenstabilität der Pneumatikträger auf ein Minimum reduziert werden können. Entsprechendes gilt auch an etwaigen Rändern, wenn die Haltestruktur oder sonstige Baugruppen der Pneumatikträgerhalteklammer ihre Breite erreicht hat und in senkrecht zur Klammerebene ausgerichtete Oberflächenbereiche übergeht, für diesen Übergangsbereich, der sich ebenfalls konkav in Bezug auf den jeweiligen Pneumatikträger von diesem entfernt, so dass auch diesbezüglich das Maß von unerwünschten Eingriffen durch diese Übergangsbereiche als entsprechend gering angesehen werden kann.

Zwischen den aufeinander zuweisenden Halteflächen kann eine Klammerebene definiert werden, sodass die beiden Halteflächen vorzugsweise jeweils mit einer Komponente senkrecht zu der Klammerebene ausgerichtet sind. Die Halteflächen können dann in dieser Klammerebene im Wesentlichen ihre federnd wirksamen Haltekräfte ausüben. Vorzugsweise kann dann die Pneumatikträgerhalteklammer derart an dem Pneumatikträger befestigt werden, dass die Klammerebene im Wesentlichen einem Querschnitt durch den Pneumatikträger senkrecht zu dessen Längserstreckungsrichtung entspricht.

Die aufeinander zuweisenden und jeweils mit einer Komponente senkrecht zu der Klammerebene ausgerichteten Halteflächen können mithin auch wegen ihrer senkrechten Ausrichtung zu der Klammerebene möglichst breitflächig und damit möglichst großflächig verteilt ihre Klammerkräfte bzw. ihre federnd wirksamen Haltekräfte aufbringen, sodass auch auf diese Weise die Gefahr einer punktuellen mechanischen Belastung der Pneumatikträger minimiert werden kann.

Die Haltestruktur weist demnach vorzugsweise eine Innenseite auf, an welcher die Halteflächen angeordnet sind und welche dem Pneumatikträger, wenn die Pneumatikträgerhalteklammer an einem Pneumatikträger befestigt ist, zugewandt ist. Dementsprechend kann an einer der Innenseite gegenüberliegenden und nach außen weisenden Seite vorzugsweise eine Außenseite definiert werden.

In vorliegendem Zusammenhang bezeichnet der Begriff "Haltefläche" jede Fläche der Haltestruktur bzw. der Pneumatikträgerhalteklammer, welche dazu geeignet bzw. bestimmt ist, an einem Pneumatikträger anzuliegen und Haltekräfte auf den Pneumatikträger aufzubringen bzw. von diesem ausgehend auch aufzu nehmen. In konkreter Umsetzung hat sich hierbei herausgestellt, dass sowohl reibend wirksame Haltekräfte als auch durch die Federkraft der beiden Enden bedingte und dementsprechend den Innenraum umschließend wirkende Haltekräfte in unterschiedlichen Richtungen jeweils auftreten können, was insbesondere auch davon abhängt, in welchem Maße die jeweiligen Halteflächen dem jeweiligen Verlauf des Pneumatikträgers in dem Querschnitt, in welchem die Pneumatikträgerhalteklammer mit ihrer Haltestruktur an dem Pneumatikträger befestigt ist, folgen.

In vorliegendem Zusammenhang bezeichnet der Begriff der "Haltestruktur" eine Baugruppe der Pneumatikträgerhalteklammer, welche die beiden Halteflächen sowie zwei federnd gegeneinander verlagerbare Enden aufweist und dementsprechend unmittelbar mit einem Pneumatikträger in Kontakt tritt bzw. treten kann, wenn die Pneumatikträgerhalteklammer an einem Pneumatikträger befestigt ist bzw. wird.

Zum einen ist es denkbar, dass beispielsweise durch eine Schraubzwinge, welche die Haltestruktur parallel zur Stärke der Haltestruktur umgreift, Gegenstände an der Pneumatikträgerhalteklammer befestigt werden können, um diese über die Pneumatikträgerhalteklammer dann an dem Pneumatikträger an einer pneumatischen Tragekonstruktion, beispielsweise innerhalb eines Zeltes, zu befestigen. Andererseits können entsprechende Gegenstände bereits permanent mit der Pneumatikträgerhalteklammer bzw. mit der Haltestruktur verbunden sein, beispielsweise um eine Lampe oder ein Kabel an einem Pneumatikträger zu befestigen bzw. aufhängen zu können. In derartigen Fällen kann beispielsweise die Lampe oder das Kabel mit der Pneumatikträgerhalteklammer bzw. mit der Haltestruktur permanent verbunden sein bzw. diese Pneumatikträgerhalteklammer direkt tragen. Hierbei versteht es sich, dass eine derartige permanente Verbindung eine gewisse Inflexibilität in den Anwendungsbereichen der jeweiligen Pneumatikträgerhalteklammer bedingt, wobei es letztlich auch denkbar ist, dass neben einer Lampe oder einem Kabel noch weitere Gegenstände an einer derartigen Pneumatikträgerhalteklammer befestigt werden können, solange deren maximale Tragelast nicht überschritten wird. Eine derartige ergänzende Befestigung kann beispielsweise wiederum über eine Schraubzwinge oder ähnliches erfolgen. Andererseits kann die Pneumatikträgerhalteklammer ergänzen zu der Haltestruktur beispielsweise einen Haken, Ösen oder sonstige Vorsprünge, Hinterschneidungen oder ähnliches aufweisen, welche ein flexibles Befestigen von Gegenständen an der Pneumatikträgerhalteklammer ermöglichen.

Auf diese Weise kann dann die Pneumatikträgerhalteklammer entsprechend flexibel an einem Pneumatikträger befestigt und zum Befestigen weiterer Gegenstände an dem Pneumatikträger genutzt werden.

Es liegt in der Natur der Sache, dass pneumatische Tragkonstruktionen bzw. Pneumatikträger nur begrenzt Lasten aufnehmen können, insbesondere wenn diese Lasten punktuell, wie dieses eine Pneumatikträgerhalteklammer naturgemäß vermittelt, an dem Pneumatikträger bzw. an der pneumatischen Tragkonstruktion angreifen. Dementsprechend versteht es sich, dass die Massivität der Haltestrukturen und der federnd gegeneinander verlagerbaren Enden nicht beliebig hochgewählt sein muss, sondern dass es vielmehr Sinn macht, den jeweiligen Pneumatikträgerhalteklammem eine Maximallast zuzuordnen, für welche diese vorzugsweise ausgelegt sind. Entsprechend der Maximallast kann dann die Federkraft bzw. die genaue Krümmung oder der Krümmungsverlauf der Halteflächen sowie die konkrete Geometrie der Haltestruktur an die jeweiligen Erfordernisse, welche der zugehörige Pneumatikträger stellt, angepasst werden. Diesbezüglich kann insbesondere die Breite und die Stärke der Haltestruktur sowie der Abstand der Enden und die Materialwahl bzw. die Wahl des inneren Aufbaus der Haltestruktur zur Anpassung der Pneumatikträgerhalteklammer an gegebene Erfordernisse variiert werden.

Insbesondere können die Halteflächen entspannten Zustand der Pneumatikträgerhalteklammer einen mittleren Krümmungsradius zwischen 35 mm und 70 mm aufweisen. Ein derartiger Krümmungsradius ermöglicht bei den genannten Pneumatikträgem, ggf. unter Berücksichtigung der Federkraft, welche die beiden Enden der Haltestruktur aufbringen können, einen ausreichend großflächigen Kontakt zu den jeweiligen Pneumatikträgem, sodass eine zu große punktuelle Belastung der jeweiligen Pneumatikträger, wenn die Pneumatikträgerhalteklammer an diesen befestigt werden soll, möglichst vermieden werden kann.

Wie bereits vorstehend erläutert, können die beiden Enden der Haltestruktur federnd gegeneinander verlagerbar sein, sodass diese beiden Enden gegeneinander geöffnet werden können, wenn die Pneumatikträgerhalteklammer an einem Pneumatikträger befestigt werden soll. In vorliegendem Zusammenhang beschreibt dementsprechend der Begriff "in entspanntem Zustand" einen Zustand der Pneumatikträgerhalteklammer, bei welchem die beiden Enden der zugehörigen Haltestruktur nicht entgegen ihrer federnden Verlagerbarkeit mit einer Kraft beaufschlagt sind.

Insbesondere können kumulativ bzw. alternativ zu der Wahl des Krümmungsradius der beiden Halteflächen die beiden Enden wenigstens 4 mm und/oder wenigstens 10 % des mittleren Krümmungsradius der beiden Halteflächen in entspanntem Zustand voneinander beabstandet sein, sodass zwischen den beiden Enden ein ausreichend großer Spalt verbleibt, so dass insbesondere etwaige Zeltbahnen oder sonstige Bestandteile der pneumatischen Tragekonstruktion bzw. des von der pneumatischen Tragekonstruktion getragenen Körpers nicht zu stark beansprucht werden. Insbesondere können dabei Verschleiß, beispielsweise durch Reibung, welche auf Zeltbahnen oder sonstige Strukturen, die von der pneumatischen Tragekonstruktion getragen werden oder dort aufliegen, und sonstige Beanspruchungen derartiger Strukturen auf ein Minimum reduziert werden. Darüber hinaus hat sich herausgestellt, dass zumindest ein entsprechender Abstand von wenigstens 4 mm bzw. wenigstens 10 % des mittleren Krümmungsradius der beiden Halteflächen dazu führt, dass die beiden Enden in ausreichendem Maße gegeneinander verlagert werden können, um die Haltestruktur um einen bereits mit Innendruck beaufschlagten Pneumatikträgem herumzulegen und an diesem festzuklammem, ohne die Haltestruktur zu weit öffnen zu müssen und gegebenenfalls zu beschädigen.

In diesem Zusammenhang sei erwähnt, dass es nicht zwingend notwendig ist, die Pneumatikträger erst im Nachhinein, also nachdem der jeweilige Pneumatikträger mit einem Innendruck beaufschlagt ist, an dem Pneumatikträger anzubringen. Es ist andererseits auch möglich, die Pneumatikträgerhalteklammer an dem Pneumatikträger bereits zu positionieren, während dieser noch entspannt ist oder während dieser gerade mit einem steigenden Innendruck beaufschlagt wird. In derartigen Fällen brauchen - naturgemäß - die beiden Enden ohnehin nicht sehr weit voneinander gegen die zugehörige Federkraft entfernt werden, damit die Haltestruktur den Pneumatikträger in ausreichendem Maße umgibt, wobei dieser sich dann von innen heraus in die Haltestruktur einspannt.

Unabhängig von der Wahl mittleren Krümmungsradius der beiden Halteflächen bzw. des Minimalabstandes der beiden Enden kann es kumulativ bzw. alternativ vorteilhaft sein, die beiden Enden in entspanntem Zustand der Pneumatikträgerhalteklammer nicht mehr als 30 mm bzw. nicht mehr als 30 % des mittleren Krümmungsradius der beiden Halteflächen voneinander zu beabstanden. Es hat sich herausgestellt, dass sogar bei einem derartig großen Abstand noch ausreichende Haltekräfte aufgebracht werden können, wenn die zugehörige Pneumatikträgerhalteklammer an einem Pneumatikträger befestigt ist und im Übrigen die Pneumatikträgerhalteklammer derart ausgestaltet ist, dass sie möglichst gleichförmig Kräfte zwischen dem Pneumatikträger einerseits und dem zu befestigenden Gegenstand überträgt.

Insbesondere können kumulativ bzw. alternativ hierzu die beiden Enden in entspannten Zustand um einen in der Klammerebene liegenden Winkel von weniger als 50°, insbesondere von weniger als 48° bzw. von weniger als 45° Grad voneinander beabstandet sein, was dementsprechend ebenfalls noch zu einer Übertragungsmöglichkeit ausreichend hoher Haltekräfte führen kann.

Der Winkel kann hierbei beispielsweise von einem Massenzentrum der Haltestruktur ausgehend oder aber von einem geometrischen Zentrum der Haltestruktur ausgehend gemessen werden. Die hierbei auftretenden Messungenauigkeiten aufgrund der Wahl des zugehörigen Zentrums liegen innerhalb der vorhandenen Messungenauigkeiten bzw. Anpassungsbereiche, welche aufgrund der unterschiedlichen Materialien der Pneumatikträger, der unterschiedlichen Durchmesser sowie auch der unterschiedlichen Innendrücke, mit welchem die Pneumatikträger im konkreten Nutzungsfall der Pneumatikträgerhalteklammer aufgepumpt sind, ohne vorliegen.

Während das Massezentrum vorzugsweise letztlich dem Schwerpunkt der jeweiligen Pneumatikträgerhalteklammer bzw. insbesondere der Haltestruktur entsprechen kann, kann das geometrische Zentrum beispielsweise durch den Ausgangspunkt der Krümmungsradien der Halteflächen bzw. den Mittelpunkt zwischen diesen Ausgangspunkten, wenn diese nicht übereinstimmen sollten, bestimmt werden. Ebenso ist es denkbar, dass geometrische Zentrum beispielsweise als den Schwerpunkt der Pneumatikträgerhalteklammer bzw. insbesondere der Haltestruktur anzusetzen, wenn die Dichte der Haltestruktur bzw. der Pneumatikträgerhalteklammer als 1 angesetzt wird.

Die Haltestruktur kann vorzugsweise wenigstens in einem Bereich aus Kunststoff ausgeformt sein, was einerseits eine einfache Herstellung ermöglicht und andererseits auch, ohne weitere ergänzende Maßnahmen, einen schonenden Materialkontakt zu einem Pneumatikträger oder auch zu anderen Komponenten, der von dem Pneumatikträger oder einer zugehörigen pneumatischen Tragkonstruktion getragenen Anordnung, wie beispielsweise der Plane eines Zeltes, ermöglichen kann. Darüber hinaus können entsprechende Haltestrukturen bzw. Pneumatikträgerhalteklammem aus Kunststoff verhältnismäßig flexibel, also mit angepassten Geometrien, bereitgestellt werden, sodass auf konkrete Umstände von am Markt befindlichen Pneumatikträgem flexibel eingegangen werden kann.

Insbesondere kann die gesamte Haltestruktur, insbesondere die gesamte Pneumatikträgerhalteklammer, aus Kunststoff bereitgestellt werden, was dementsprechend eine flexible und baulich einfache Bereitstellung ermöglicht.

Vorzugsweise ist der Kunststoff ein thermoplastischer Kunststoff, sodass die Haltestruktur bzw. etwaige Baugruppen hiervon oder sogar die gesamte Pneumatikträgerhalteklammer auf baulich einfache Weise, beispielsweise durch Spritzguss oder sogar durch 3D-Druck oder durch sonstige thermoplastische Formgebungsverfahren, bereitgestellt werden kann.

Insbesondere kann als thermoplastischer Kunststoff ein Polyester genutzt werden, wobei sich vorzugsweise Polylactide als vorteilhaft erweisen, insbesondere beispielsweise da diese letztlich biologisch abbaubar sind. Zwar handelt es sich bei Polylactiden um synthetische Polymere, die jedoch im Wesentlichen aus chemisch aneinander gebundenen Milchsäuremolekülen aufgebaut sind, was letztlich der biologische Abbaubarkeit erleichtert. Auch im Übrigen kann sich die geringere Feuchtigkeitsaufnahme, die geringe Flammbarkeit und/oder die hohe UV-Beständigkeit und Farbechtheit, welche Polylactide bei geeigneter Auswahl aufweisen, entsprechend vorteilhaft für Anwendungen im Bereich von Pneumatikträgem erweisen.

Kumulativ bzw. alternativ zu den im Übrigen vorliegend als vorteilhaft genannten Merkmalen kann die eingangs erläuterte Haltestruktur wenigstens in einem Bereich, vorzugsweise zur Gänze, und insbesondere die gesamte Pneumatikträgerhalteklammer, als Hohlkörper ausgeformt sein. Das Ausformen als Hohlkörper hat insbesondere den Vorteil, dass die mechanischen Eigenschaften der Haltestruktur bzw. der gesamten Pneumatikträgerhalteklammer mit einem verhältnismäßig großen Spielraum angepasst werden können, indem letztlich beispielsweise lediglich die Wandstärke in geeigneter Weise gewählt wird.

So kann die Wandstärke insbesondere derart gewählt sein, dass der Haltekörper bzw. die Pneumatikträgerhalteklammer bei der vorliegend gewählten Belastung, wie sie durch das Öffnen der Enden der Haltestruktur entgegen der Eigenelastizität der Haltestruktur einerseits bzw. bei bestimmungsgemäßem Tragen der Gegenstände andererseits auftreten kann, ausreichend stabil verbleibt. Andererseits kann die Wandstärke ausreichend dünn gewählt werden, um die Federeigenschaften und auch das Gesamtgewicht der Haltestruktur der Pneumatikträgerhalteklammer in gewünschter Weise beeinflussen zu können.

Insbesondere kann der Hohlkörper über eine Innenstruktur versteift sein, die beispielsweise in Form eines Gitters oder in Form von Waben gewählt sein kann. Auch durch eine derartige Innenstruktur kann ggf. die Steifigkeit bzw. die Biegefestigkeit und mithin die Federkraft, welcher die beiden Enden gegeneinander verlagert werden können, in großem Maße beeinflusst und in gewünschter Weise gewählt werden. Selbiges gilt dann auch zugehörig hinsichtlich des Gesamtgewichts der Haltestruktur bzw. der Pneumatikträgerhalteklammer.

Je nach konkreter Gestaltung, kann eine Wandung den Hohlkörper der Haltestruktur bzw. der Pneumatikträgerhalteklammer zur Gänze umschließen, was insbesondere die Gefahr von scharfen Kanten minimieren, aber auch der Gesamtanordnung ein formschönes Äußeres verleihen kann. Insbesondere kann das Eindringen von Dreck oder sonstigen Verschmutzungen und somit die Gefahr eines dementsprechend unschönen Äußeren auf ein Minimum reduziert werden. Insoweit letzteres in Kauf genommen werden kann, können aber auch die Haltestruktur bzw. die die Pneumatikträgerhalteklammer mit offenen Hohlkörpern versehen sein, sodass beispielsweise auch eine ggf. vorhandene Gitter- bzw. Wabenstruktur von außen sichtbar ist. Auch diesbezüglich bestehen gewissen Freiheiten in der konkreten Ausgestaltung der Haltestruktur der Pneumatikträgerhalteklammer, da auch entsprechende Wandungen Beiträge zu dem Gewicht sowie zu der Steifigkeit bzw. zu der Federkonstante beitragen.

Insbesondere kann die gesamte Haltestruktur, vorzugsweise sogar die gesamte Pneumatikträgerhalteklammer, einstückig ausgebildet sein. Dieses ermöglicht zum einen auf baulich und konstruktiv einfache Weise eine verhältnismäßig große Eigenstabiliät der Gesamtanordnung. Auch kann sich die Einstückigkeit hinsichtlich des Herstellungsprozesses ggf. von Vorteil erweisen, da letztlich die gesamte Haltestruktur bzw. sogar die gesamte Pneumatikträgerhalteklammer in einem Fertigungsschritt, beispielsweise in einem Spritzgussschritt bzw. in einem 3D-Druck Schritt gefertigt werden kann.

Die federnd gegeneinander verlagerbaren Enden können kumulativ bzw. alternativ zu den übrigen vorliegend als vorteilhaft erläuterten Merkmalskombinationen mit einer Federkonstante D zwischen 5 N/mm und 40 N/mm öffenbar sein. Es hat sich in konkreter Umsetzung herausgestellt, dass insbesondere innerhalb der vorstehend genannten Spannbreite die Pneumatikträgerhalteklammer einerseits gut handhabbar und insbesondere auch im Nachhinein ohne weiteres um unter Innendruck stehende Pneumatikträger gebracht werden kann, wobei sie, wenn sie auch im Übrigen in geeigneter Weise ausgestaltet ist, dann dennoch mit einer ausreichenden Haltekraft an diesem verbleiben kann, ohne die jeweiligen Pneumatikträger zu sehr punktuell zu belasten.

Unabhängig von der vorstehend genannten Spannweite kann es insbesondere von Vorteil sein, wenn die Enden mit einer Federkonstante D von 5 N/mm und mehr, insbesondere von 10 N/mm und mehr, öffenbar sind, um auf diese Weise eine ausreichende Haltekraft gewährleisten zu können.

Andererseits kann es unabhängig hiervon von Vorteil sein, wenn die beiden Enden mit einer Federkonstante D von 40 N/mm und weniger, insbesondere von 36 N/mm und weniger, öffenbar sind, sodass die Kräfte zum Öffnen nicht zu groß sind und die zugehörige Pneumatikträgerhalteklammer ohne weiteres von Hand betätigt über einen Pneumatikträger gebracht werden kann.

Zur Bestimmung der Federkonstanten kann beispielsweise ein Ring auf eine ebene Fläche gelegt werden, die beispielsweise durch ein Blatt Papier mit einer auf diesem befindlichen Skala, abgedeckt ist. Dann können jeweils zwei Haken von jeweils zwei Federwaagen die Enden umgreifen und mit einer Kraft beaufschlagt werden, welche über die Federwaagen dann gemessen werden kann. Die Kraft sowie die Aufweitung kann dann dementsprechend notiert werden, wobei eine Aufweitung zwischen 10 mm und 120 mm gemessen werden kann. Gegebenenfalls erweist sich eine Aufweitung bis zu 120 mm als verhältnismäßig groß, wenn sie im Ernstfall im Einsatz nicht genutzt wird, was insbesondere bei kleineren Innendurchmessern der Haltestruktur auftreten kann. Dann werden geringere Aufweitung als maximale Obergrenze gesetzt. Letztlich kann für die gewählten Messungen der Bereich sinnvoll durchlaufen und gemessen werden, innerhalb des die jeweilige Haltestruktur bzw. die Pneumatikträgerhalteklammer geöffnet werden muss, um einen unter Druck befindliche Pneumatikträger umgreifen zu können, für welchen die jeweilige Haltestruktur bzw. die Pneumatikträgerhalteklammer ausgelegt ist.

Vorzugsweise ist wenigstens eine der Halteflächen durchgängig stetig gekrümmt, sodass über die gesamte Haltefläche punktuelle Belastungen auf den jeweiligen Pneumatikträger wie sie durch eine unstetige Krümmung auftreten können, vermieden werden können.

Dementsprechend ist es von Vorteil, wenn beide Halteflächen durchgängig stetig gekrümmt sind, sodass von beiden Halteflächen dementsprechend geringe punktuelle Belastungen auf den zugehörigen Pneumatikträger ausgeübt werden können.

Insbesondere kann die Innenseite der Haltestruktur durchgängig stetig gekrümmt sein, sodass die Innenseite der Haltestruktur dementsprechend gleichförmig an dem zugehörigen Pneumatikträger anliegt. In diesem Zusammenhang sei betont, dass - naturgemäß - die Innenseite der Haltestruktur an den Enden der Haltestruktur endet, an welchem dann im Zweifel eine unstetige Krümmung, vorzugweise eine Krümmung nach außen, also eine konkave Krümmung vorliegt, die, schon wegen ihrer Ausrichtung nach außen, dementsprechend wesentlich weniger auf einen Pneumatikträger einwirken kann als die Innenseite der Haltestruktur.

Insbesondere kann wenigstens ein Gebiet der Haltestruktur parallel zur Klammerebene dem Verlauf der zugehörigen Haltefläche mit einer konstanten Breite folgen. Durch die konstante Breite kann gewährleistet werden, dass die Haltestruktur in diesem Gebiet im Wesentlichen gleichförmig etwaigen Kräften, welche Klammerebene bzw. parallel hierzu von innen nach außen auf die Haltestruktur in dem entsprechenden Gebiet wirken, in ausreichendem Maße gleichförmig entgegenwirken kann, sodass auch auf diese Weise zu punktuelle Belastungen des Pneumatikträgers, aber auch der Haltestruktur selbst, auf ein Minimum reduziert werden können.

Vorzugsweise folgt wenigstens ein die Halteflächen tragendes Gebiet dem Verlauf der zugehörigen Haltefläche parallel zur Klammerebene mit einer konstanten Breite. Auf diese Weise kann dementsprechend ein möglichst gleichförmiger Kraftverlauf sowohl an dem Pneumatikträger als auch in der Haltestruktur selbst gewährleistet werden, wenn die Pneumatikträgerhalteklammer mit ihrer Haltestruktur den Pneumatikträger umgreift und an diesem befestigt ist.

In diesem Zusammenhang sei herausgestellt, dass die Breite mithin vorzugsweise ein Maß für die Mächtigkeit der Haltestruktur oder auch für die Mächtigkeit von anderen Baugruppen der Pneumatikträgerhalteklammer parallel zur Klammerebene ist. Vorzugsweise ist die Breite über kürzeste Erstreckung der jeweiligen Baugruppe, deren Breite beschrieben wird, parallel zur Klammerebene definiert, während senkrecht hierzu von einer Länge gesprochen werden kann. Länge und Breite sind mithin vorzugsweise senkrecht zueinander ausgerichtet, auch wenn sie vorzugsweise dem Verlauf der jeweiligen Struktur folgen, und liegen jeweils parallel zur Klammerebene. Vorzugsweise wird senkrecht zur Klammerebene die Stärke zugehöriger Strukturen, also beispielsweise der Haltestruktur oder der Pneumatikträgerhalteklammer bzw. von Baugruppen derselben, definiert.

Insbesondere kann die Haltestruktur eine konstante Breite aufweisen, sodass die Haltestruktur etwaigen Kräften, welche von innen heraus auf sie wirken, also insbesondere etwaigen Kräften, welche der Pneumatikträger von innen heraus auf sie auswirken kann, möglichst gleichmäßig begegnen kann.

Die Haltestruktur kann zumindest im Bereich der Halteflächen eine Breite von wenigstens 4 mm bzw. von wenigstens 10 % des mittleren Krümmungsradius der beiden Halteflächen aufweisen, sodass die Breite der Haltestruktur zumindest in diesem Bereich eine ausreichende Steifigkeit verleiht, um den von innen auf sie wirkenden Kräfte begegnen zu können. Die vorgenannte Breite der Halteflächen ermöglicht darüber hinaus auch eine gute Handhabbarkeit zumindest in dieser Dimension, da kleinere Strukturen entsprechend schwieriger zu ergreifen sind, insbesondere wenn beispielsweise mit nassen Fingern oder mit klammen Fingern oder aber auch mit Handschuhen gearbeitet werden muss.

Vorzugsweise weist die Haltestruktur zumindest im Bereich der Halteflächen eine Breite von nicht mehr als 10 mm bzw. von nicht mehr als 15 % des mittleren Krümmungsradius der beiden Halteflächen auf, sodass eine ausreichende Flexibilität der Haltestruktur im Bereich der Halteflächen gewährleistet werden kann und sich diese in ausreichend gutem Maße auch an eine Form der jeweiligen Pneumatikträger anpassen können. Auch kann, wenn die Haltestrukturen zumindest im Bereich der Halteflächen nicht zu breit gewählt sind, der Beitrag dieser Bereiche zum Gesamtgewicht der Pneumatikträgerhalteklammer entsprechend begrenzt werden, sodass die Gegenstände, welche mittels der Pneumatikträgerhalteklammer dann an dem Pneumatikträger an der pneumatischen Tragkonstruktion befestigt werden sollen, hinsichtlich ihres Gewichts möglichst maximal gewählt werden können.

Wenigstens eine Region der Haltestruktur kann vorzugsweise eine Stärke von wenigstens 8 mm bzw. wenigstens 20 % des mittleren Krümmungsradius der beiden Halteflächen aufweisen, wodurch sichergestellt ist, dass die Haltestruktur zumindest in ihrer Stärke ausreichend eigensteif ist und vor allen Dingen nicht zu schmal mit dem Pneumatikträger wechselwirkt, was ggf. zu einer punktuellen Belastung des Pneumatikträgers führen kann, so dass dessen Tragfähigkeit oder aber auch die Haltekraft, mit welcher die Pneumatikträgerhalteklammer an dem Pneumatikträger festgehalten ist, nachteilig beeinflusst werden kann.

Kumulativ bzw. alternativ hierzu kann es von Vorteil sein, wenn wenigstens eine Region der Haltestruktur, vorzugsweise die gesamte Haltestruktur, eine Stärke von nicht mehr als 20 mm und/oder nicht mehr als 30 % des mittleren Krümmungsradius der beiden erhaltenen Flächen aufweist. Durch die Begrenzung der Stärke auf die vorgenannten Maximalwerte kann eine zu große Eigensteifigkeit der Haltestruktur bzw. der Pneumatikträgerhalteklammer aufbaulich einfache Weise vermieden werden. Auch bedingt eine zu große Erstreckung der Haltestruktur senkrecht zur Klammerebene, dass die Haltestrukturen etwaig gekrümmten Verläufen von Pneumatikträgem nicht folgen kann, was wiederum zu ungewünschten punktuellen Überbelastungen führen kann. Mithin bedingt eine entsprechende Begrenzung der Breite vorzugsweise eine Erhöhung der Einsatzmöglichkeiten der zugehörigen Pneumatikträgerhalteklammer.

Eine gleichmäßige Kontaktfläche zu dem Pneumatikträger und mithin eine Minimierung etwaiger punktueller Belastungen lässt sich darüber hinaus vorzugsweise dadurch erzielen, dass wenigstens eine Region der Haltestruktur eine konstante Stärke aufweist. Je nach konkreter Umsetzung können vorzugsweise etwaige Haltearme bis auf einen Zwischenbereich und insbesondere die gesamte Haltestruktur eine konstante Stärke aufweisen, sodass dementsprechend auch ein verhältnismäßig gleichförmiger Kontakt zu dem jeweiligen Pneumatikträger gewährleistet werden kann.

Vorzugsweise ist, wie bereits vorstehend angedeutet, an einer Außenseite der Haltestruktur ein Haken angeordnet, sodass an der Pneumatikträgerhalteklammer unterschiedliche Gegenstände schnell und einfach befestigt werden können. Dementsprechend können die Gegenstände nach Bedarf auch entnommen werden. So können beispielsweise Jacken oder andere Kleidungsstücke an einem derartigen Haken dann befestigt werden. Insbesondere ist es aber auch denkbar, Lampen oder ähnliches mit einem zugehörigen Haltebügel, den in der Regel derartige Lampen aufweisen, an einem derartigen Haken zu befestigen.

Vorzugsweise weist der Haken eine geringere Stärke als die Haltestruktur auf, was einerseits den Vorteil hat, dass kleinere Gegenstände bzw. Gegenstände mit relativ kleinen Aufhängemöglichkeiten, Aufhängern oder Haltebügeln an einem derartigen Haken ebenfalls zu befestigen sind. Darüber hinaus hat sich herausgestellt, dass ein derartig ausgestalteter Haken die Haltestruktur in ihrer Eigensteifigkeit weniger belastet, sodass die Gesamtanordnung stabiler baut bzw. auch dauerhaft mehr Gewicht tragen kann, als wenn der Haken dieselbe Stärke wie die Haltestruktur aufweisen würde. Zwar wäre es auch denkbar, dass der Haken stärker als die Haltestruktur ausgebildet sein kann, was letztlich jedoch im Lichte des Vorgesagten wenig sinnvoll erscheint.

Der Haken kann ein Zentrum aufweisen, welches in einer senkrecht zu der Klammerebene angeordneten Symmetrieebene der Haltestruktur angeordnet ist. Etwaiger Zugkräfte, welche mithin der Gegenstand, der an einem derartig ausgestalteten Haken aufgehängt ist, in die Pneumatikträgerhalteklammer einbringt, reichen mithin dann zentrisch auch in die Symmetrieebene der Haltestruktur, sodass auch die Haltestruktur und der zugehörige Pneumatikträger dementsprechend zentrisch belastet sind und die Kräfte sich diesbezüglich möglichst gleichförmig verteilen und die Eingriffe in die Stabilität des Pneumatikträgers aufgrund der Pneumatikträgerhalteklammer möglichst gering sind.

Je nach konkreter Umsetzung kann der Haken asymmetrisch an der Haltestruktur angesetzt sein, um auf diese Weise etwaige Kräfte, welche asymmetrisch auf den Haken wirken, entsprechend asymmetrisch in die Haltestruktur einzuleiten, wenn die Asymmetrien derart gewählt sind, dass diese sich gegeneinander ausgleichen, sodass letztlich die Kräfte wieder symmetrisch von der Haltestruktur in den Pneumatikträger und zurück eingebracht werden.

Insoweit der Haken einstückig mit der Haltestruktur ausgebildet ist, kann der Haken auch dementsprechend asymmetrisch in die Haltestruktur übergehen, um die vorgenannten Vorteile umsetzen zu können.

Wie bereits vorstehend dargelegt, kann die Pneumatikträgerhalteklammer insbesondere der Befestigung von Gegenständen an einer pneumatischen Tragekonstruktion, nämlich an deren Pneumatikträgem, dienen. Vorzugsweise handelt es sich hierbei um pneumatische Tragekonstruktionen, welche Bestandteil eines Zelts, insbesondere eines Vorzelts, sind, da die Pneumatikträgerhalteklammer gerade für diesen Zweck sich als besonders vorteilhaft erwiesen hat.

Bei geeigneter Ausgestaltung kann eine entsprechende Pneumatikträgerhalteklammer auch für längere Zeit an einem Zelt bzw. Vorzelt verbleiben, insbesondere wenn diese über längere Zeit nicht abgebaut werden soll. Andererseits lassen sich entsprechende Pneumatikträgerhalteklammer schnell und einfach an entsprechenden Pneumatikträgem bzw. pneumatischen Tragkonstruktionen von Zelten bzw. Vorzelten befestigen oder von diesen lösen, sodass auch bei Zelten bzw. Vorzelten, welche regelmäßig auf oder abgebaut werden, die jeweiligen Pneumatikträgerhalteklammem ohne weiteres vorteilhaft zum Einsatz kommen können.

Es versteht sich, dass die Merkmale der vorstehend bzw. in den Ansprüchen beschriebenen Lösungen gegebenenfalls auch kombiniert werden können, um die Vorteile entsprechend kumuliert umsetzen zu können.

Weitere Vorteile, Ziele und Eigenschaften vorliegender Erfindung werden anhand nachfolgender Beschreibung von Ausführungsbeispielen erläutert, die insbesondere auch in anliegender Zeichnung dargestellt sind. In der Zeichnung zeigen:

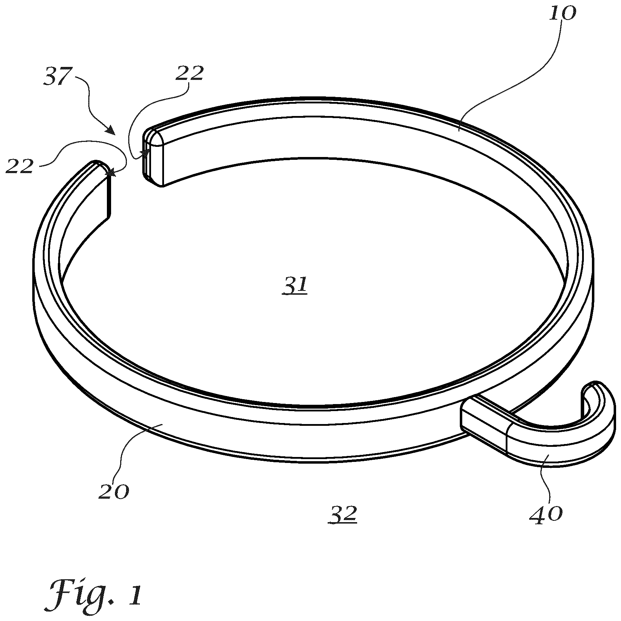

- Figur 1: eine Pneumatikträgerhalteklammer in perspektivischer Ansicht;
- Figur 2: einen schematischen Schnitt durch die Pneumatikträgerhalteklammer nach Fig. 1 entlang der Linie II-II in Fign. 4 und 5;
- Figur 3: eine Aufsicht auf die Pneumatikträgerhalteklammer nach Fign 1 und 2;
- Figur 4: eine auf den Haken der Pneumatikträgerhalteklammer nach Fign 1 bis 3 gerichtete Seitenansicht der Pneumatikträgerhalteklammer nach Fign 1 bis 3;
- Figur 5: eine senkrecht zu den Ansichten der Fign. 3 und 4 ausgerichtete Seitenansicht der Pneumatikträgerhalteklammer nach Fign 1 bis 4;
- Figur 6: eine schematische, teilweise aufgebrochene Ansicht eines Vorzelts mit einer pneumatischen Tragekonstruktion;
- Figur 7: eine beispielsweise Festlegung der Pneumatikträgerhalteklammer nach Fign. 1 bis 5 an der Tragekonstruktion nach Fig.6 in schematischem Schnitt;
- Figur 8: eine beispielsweise Festlegung der Pneumatikträgerhalteklammer nach Fign. 1 bis 5 an der Tragekonstruktion eines alternativen Vorzelts in schematischem, der Fig. 7 entsprechendem Schnitt; und

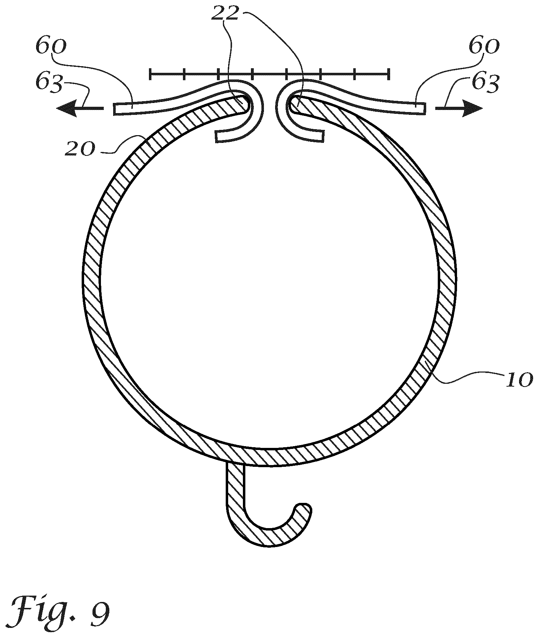

- Figur 9: eine schematische Darstellung zur Bestimmung einer Federkonstanten zwischen den Enden der Haltestruktur der Pneumatikträgerhalteklammer.

Die in den Figuren dargestellte Pneumatikträgerhalteklammer 10 umfasst eine Haltestruktur 20, welche bei diesem Ausführungsbeispiel in Form eines offenen Ringes ausgebildet ist, der insbesondere zwei Haltearme 24 umfasst, die durch einen Zwischenbereich 25 miteinander verbunden sind. Hierbei gehen die Haltearme 24 und der Zwischenbereich 25 bei vorliegendem Ausführungsbeispiel nahtlos und ohne irgendwelche Übergänge ineinander über.

An den Enden der Haltearme 24, welche den Zwischenbereich 25 abgewandt sind, finden sich Enden 22 der Haltestruktur 20, welche um einen Abstand 37 voneinander beabstandet sind.

Die Haltestruktur 20 erstreckt sich im Wesentlichen in einer Klammerebene 30 und umfasst eine Innenseite 31 und eine Außenseite 32, welche der Innenseite 31 in der Klammerebene 30 gegenüberliegt, wobei die Innenseite 31 von den Haltearmen 24 bzw. von der Haltestruktur 20 bis auf den Abstand 37 umgeben ist.

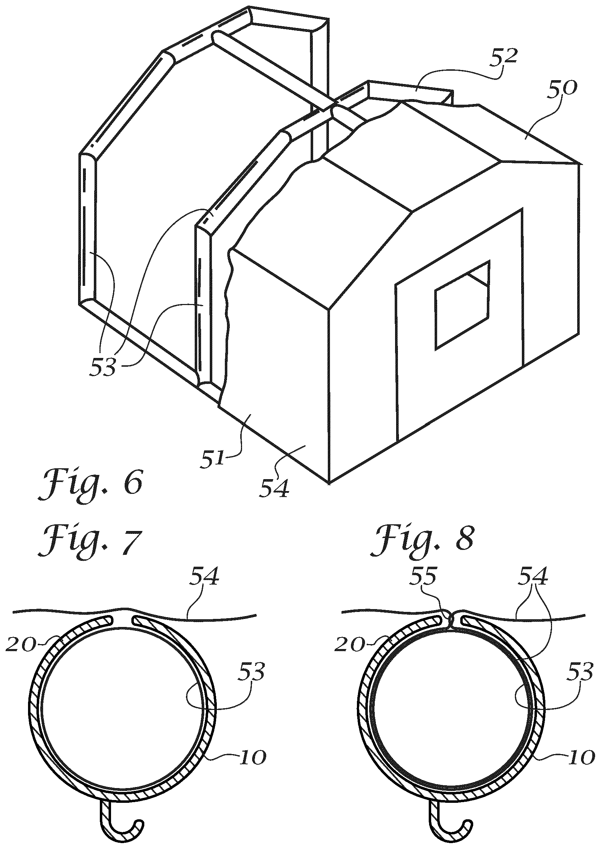

Die Pneumatikträgerhalteklammer 10 ist dafür ausgelegt, geeignet bzw. bestimmt, an Pneumatikträgem 53 pneumatischer Tragekonstruktionen 52, wie sie beispielsweise für Zelte 50 bzw. Vorzelte 51, wie dieses beispielhaft in Figur 6 dargestellt ist, zu finden sind, zu befestigen, wobei die Pneumatikträgerhalteklammem 10 vorzugsweise, wie in Figuren 7 und 8 exemplarisch dargestellt, mit ihrer Haltestruktur 20 und den voneinander beabstandeten Enden 22 entsprechend Pneumatikträger 53 umgreifen können.

Die Haltestruktur 20 ist hierbei derart ausgebildet, dass die Enden 22 gegeneinander federnd verlagerbar sind, sodass die Haltestruktur 20 nachträglich um einen mit Innendruck beaufschlagten Pneumatikträger 53 herumgelegt werden können, wie dieses exemplarisch in Figur 7 dargestellt ist, welche einen Querschnitt durch einen Pneumatikträger 53 der Anordnung nach Figur 6 darstellt.

Aufgrund des Abstandes 37 der Enden 22 ist es auch denkbar, dass der Pneumatikträger 53 fest mit einer Zeltplane 54 des Zelts 50 verbunden sein kann, indem die Zeltplane 54 beispielsweise über eine Naht 55 und einen entsprechend abgesetzten Bereich den Pneumatikträger 53 umschließt, oder indem die Zeltplane 54 den Pneumatikträger 53 in einer abweichenden Ausführungsform möglicherweise sogar darstellt. Bei ersterer, in Figur 8 exemplarisch dargestellten Ausführungsform kann die entsprechende Naht 55 oder eine sonstige zwischen der eigentlichen Ebene der Zeltplane 54 und dem Pneumatikträger 53 vorgesehene Struktur in dem Abstand 37 der Enden 22 verbleiben, sodass etwaige Beeinträchtigungen der pneumatischen Tragkonstruktion 52, der Pneumatikträger 53 oder auch der Zeltplanen 54 bzw. sonstiger Baugruppen des jeweiligen Zelts 50 oder Vorzelts 51 auf ein Minimum reduziert werden können.

Es versteht sich, dass die vorstehend genannten Vorteile in Bezug auf Zelte 50 bzw. Vorzelte 51 auch für andere pneumatische Tragkonstruktionen 52 bzw. anderweitig genutzte Pneumatikträger 53 dementsprechend gelten bzw. gelten können.

An der Haltestruktur 20 ist ein Haken 40 angeordnet, und zwar vorliegend vorzugsweise in dem Zwischenbereich 25, sodass an der Pneumatikträgerhalteklammer 10 Gegenstände befestigt werden können, die ihrerseits von dem Pneumatikträger 53 bzw. von der pneumatischen Tragkonstruktion 52 getragen werden können.

An der Innenseite 31 der Haltestruktur 20 können Halteflächen 21 definiert werden, welche aufeinander zuweisen und jeweils mit einer Komponente senkrecht zu der Klammerebene 30 ausgerichtet sind.

Entsprechend der Art, wie die Halterstruktur 20 einen Pneumatikträger 53 umgreift, sind die Halteflächen 21 vorzugsweise von den Enden 22 der Haltestruktur 20 ausgehend zu finden, wobei, wenn die Haltestruktur 20 hinsichtlich ihrer Enden 22 mit einer ausreichenden Federkraft auf den zugehörigen Pneumatikträger 53 einwirkt, ggf. auch die gesamte Innenseite 31 der Haltestruktur 20 als Haltefläche 21 dienen kann.

Die Halteflächen 21 weisen einen Krümmungsradius 33 auf, welcher von einem Zentrum 38 der Haltestruktur 20, vorliegend ist ein geometrisches Zentrum durch das Zentrum 38 des Krümmungsradius 33 definiert, ausgehen entlang der Halteflächen 21 verläuft, wobei der Krümmungsradius 33 bei vorliegendem Ausführungsbeispiel im Wesentlichen konstant gewählt ist. Insbesondere für den Fall variierender Krümmungsradien 33 kann ggf. der Schwerpunkt der Haltestruktur 20 oder der Pneumatikträgerhalteklammer 10 oder auch eine errechnete Mitte aus den Zentren der Krümmungsradien 33 als Zentrum 38 gewählt werden. Hierbei ist davon auszugehen, dass die hierdurch bedingten Abweichungen der Krümmungsradien 33 und der anderen geometrischen Größen im Rahmen der Messgenauigkeit in Bezug auf die Variabilität der jeweiligen Pneumatikträger 53, mit denen die Pneumatikträgerhalteklammer 10 in Wechselwirkung treten soll, keine praktikable Rolle spielen.

Je nach konkreter Ausführungsform wird ein Krümmungsradius von 42,5 mm bis 62,5 mm gewählt, da in diesen Bereichen auch entsprechend Pneumatikträger 53 mit ihren Querschnittsdurchmessem zu finden sind.

Wie unmittelbar ersichtlich, weisen die Halteflächen 21 an keiner Stelle Krümmungsradien 33 auf, welche unter 5 mm liegen, sodass diese als stetig anzusehen sind.

Andererseits versteht es sich, dass in abweichenden Ausführungsformen auch ein variierender Krümmungsradius 33 genutzt werden kann, wenn dieses vorteilhaft erscheint, beispielsweise um sehr unterschiedlichen Querschnittsdurchmessem von Pneumatikträgem 53 gerecht werden zu können.

Bei vorliegendem Ausführungsbeispiel ist der Haken 40 asymmetrisch an die Haltestruktur 20 angesetzt und greift außerhalb einer Symmetrieebene 36, welche mittig durch den Abstand 37 der Enden 22 und das geometrische Zentrum 38 der Haltestruktur 20 gelegt ist, an der Haltestruktur 20 an. Aufgrund dieser Asymmetrie kann ein Zentrum 41 des Hakens 40 auf baulich einfache Weise in die Symmetrieebene 36 der Hakenstruktur 20 gelegt werden, sodass, wenn ein Gegenstand an dem Zentrum 41 des Hakens 40 angreift, die Haltestruktur 20 und mithin die gesamte Pneumatikträgerhalteklammer 10 und auch der zugehörige Pneumatikträger 53 entsprechend gleichförmig belastet werden.

Es versteht sich, dass in abweichenden Ausführungsformen der Haken 40 auch eine andere Form aufweisen kann, die beispielsweise einen Ansatz des Hakens 40 in der Symmetrieebene 36 ermöglicht, ohne dass das Zentrum 41 des Hakens 40 die Symmetrieebene 36 der Haltestruktur 20 verlässt, was jedoch zu einem etwas aufwändigeren Haken 40 führen würde.

Bei vorliegendem Ausführungsbeispiel sind sowohl die Haltestruktur 20 als ein Hohlkörper 23 als auch die gesamte Pneumatikträgerhalteklammer 10 als ein Hohlkörper 13 ausgebildet, sodass auch der Haken 40, welcher vorliegend einstückig mit der Haltestruktur 20 ausgebildet ist, als Hohlkörper 13 vorliegt.

Es versteht sich, dass in abweichenden Ausführungsformen nicht zwingend die Pneumatikträgerhalteklammer 10 einstückig ausgebildet sein muss, was jedoch aus Stabilitätsgründen und Fertigungsgründen vorteilhaft erscheint.

Auch ist es nicht zwingend, dass die gesamte Pneumatikträgerhalteklammer 10 bzw. die gesamte Haltestruktur 20 durchgehend als Hohlkörper 13 bzw. als Hohlkörper 23 ausgebildet sind. Vielmehr können beispielsweise auch Bereiche aus Vollmaterial vorgesehen sein.

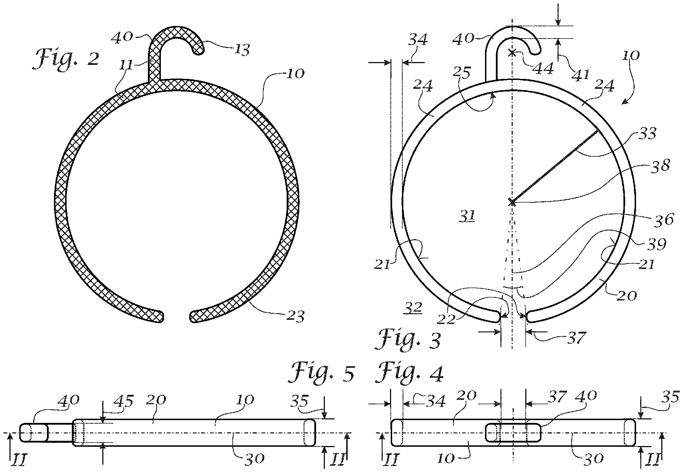

Aus Gründen der Steifigkeit und der Stabilität sind die Hohlkörper 13, 23 bei vorliegendem Ausführungsbeispiel mit einer Innenstruktur 11 versehen, welche vorliegend in Form einer Gitterstruktur gewählt ist, wie beispielhaft in Figur 2 angedeutet. Alternativ kann beispielsweise auch eine Wabenstruktur gewählt werden.

In abweichenden Ausführungsformen können insbesondere Abweichungen von einer regelmäßigen Struktur vorgenommen werden. So ist es insbesondere denkbar, dass die Innenstruktur 11 dem Verlauf der jeweiligen Halteflächen 21 folgt. Ebenso ist es denkbar, dass die Innenstruktur 11 Asymmetrien bzw. beispielsweise dichtere und weniger dichte Bereiche aufweist, wenn die Steifigkeit der Haltestruktur 20 bzw. bestimmter Baugruppen der Pneumatikträgerhalteklammer 10 gezielt lokal beeinflusst werden soll.

Die Haltestruktur 20 weist bei vorliegendem Ausführungsbeispiel darüber hinaus beispielhaft eine Breite 34 von 6 mm auf. Alternativ können diesbezüglich auch beispielsweise 5 mm gewählt werden. Eine derartige Breite erweist sich als guter Kompromiss hinsichtlich der Eigensteifigkeit bei gewählter Innenstruktur 11.

Es versteht sich, dass die Breite 34 der Haltestruktur 20 in gewissen Grenzen, also insbesondere zwischen 4 mm und 8 mm an konkrete Erfordernisse angepasst werden kann. Hierbei ist insbesondere zu berücksichtigen, dass eine zu große Breite 34 ggf. das Gewicht unnötigerweise erhöhen und möglicherweise hinsichtlich der Eigensteifigkeit der Haltestruktur 20 zu Nachteilen führen kann.

Auch dem Haken 40 kann eine Breite 44 zugeordnet werden, die bei vorliegendem Ausführungsbeispiel der Breite 34 der Haltestruktur 20 entspricht. Je nach konkreten Erfordernissen können diesbezüglich auch Abweichungen vorgenommen werden.

Die Breite 34 der Haltestruktur 20 wird im Wesentlichen parallel zur Klammerebene 30 und parallel zum Krümmungsradius 33 der zugehörigen Haltefläche 21 gemessen. Hierbei folgt die Breite 34 senkrecht dem Längsverlauf der Haltestruktur 20. Selbiges gilt auch für die Breite 44 des Hakens 40, welche dementsprechend dem Längsverlauf des Hakens 40 folgt.

Senkrecht zu der Klammerebene 30 kann eine Stärke 35 der Haltestruktur 20 definiert werden, welche bei vorliegendem Ausführungsbeispiel 12 mm beträgt, wenn der Krümmungsradius 33 zwischen 42,5 mm und 55 mm liegt. Eine Stärke 35 von 15 mm wird bei Haltestrukturen 20 gewählt, deren Krümmungsradius 33 zwischen 55 mm und 62,5 mm liegt. Eine entsprechende Anpassung der Stärke 35 erweist sich insoweit als vorteilhaft, da dann Stabilität der Gesamtanordnung in Bezug auf den Krümmungsradius 33 optimiert sein kann. Insbesondere kann ggf. sichergestellt werden, dass aktuelle Belastungen der Pneumatikträger 53 auf ein Minimum reduziert werden können.

Senkrecht zur Klammerebene 30 kann auch eine Stärke 45 des Hakens 40 definiert sein, welche bei vorliegendem Ausführungsbeispiel entsprechend der Breite 34 der Haltestruktur 20 gewählt ist. Auf diese Weise entspricht die Stärke 45 des Hakens 40 in etwa der Breite 44 des Hakens 40, sodass der Haken entlang seiner Längserstreckungsrichtung im Wesentlichen symmetrisch aufgebaut ist, was hinsichtlich etwaiger Gegenstände, welche an dem Haken 40 aufgehängt werden sollen, vorteilhaft erscheint.

Darüber hinaus ist die Stärke 45 des Hakens 40 geringer gewählt als die Stärke 35 der Haltestruktur 20. Dieses hat den Vorteil, dass der Übergang zwischen dem Haken 40 und der Haltestruktur 20 gleichförmiger hinsichtlich seiner Belastungsübergänge ausgeformt werden kann, wie insbesondere durch Bruchversuche erfahren werden konnte, sodass die derartig ausgestaltete Pneumatikträgerhalteklammer 10 insgesamt stabiler baut.

Der Abstand 37 zwischen den Enden 22 führt zu einem Winkel 39 zwischen den Enden 22, welcher in Bezug auf das geometrische Zentrum 38 der Haltestruktur 20 gemessen werden kann, von 7° in entspanntem Zustand.

Dieser Winkel kann, je nach konkreter Ausführungsform entsprechend größer, ggf. bis zu 45°, betragen, sodass ein entsprechend großer Abstand und mithin ein weit über 12 mm weisender Abstand 37, wie er bei vorliegendem Ausführungsbeispiel gewählt ist, zwischen den Enden 22 denkbar erscheint.

Die beiden Enden 22 können entgegen der Eigenelastizität der Haltestruktur 20 federnd nach außen gegeneinander nach außen verlagert werden - und dieses mit einer Federkonstanten D von 20 N/mm ± 5 N/mm.

Dieses ermöglicht insbesondere, dass die beiden Enden 22 entgegen einer Federkraft voneinander entfernt werden können, um die Pneumatikträgerhalteklammer 10 mit ihrer Haltestruktur 20 an einem Pneumatikträger 53, insbesondere wenn dieser mit einem Innendruck beaufschlagt ist, zu befestigen.

Auch kann auf diese Weise, insbesondere wenn der Pneumatikträger 53 einen leicht größeren Außendurchmesser als der Raum an der Innenseite 31 der Haltstruktur 20 aufweist, eine Federkraft aufgebaut werden, welche zumindest Teile der Halteflächen 21 gegen den jeweiligen Pneumatikträger 53 verspannt. Auf diese Weise können sowohl Reibungskräfte als auch formschließende Kräfte der Befestigung der Pneumatikträgerhalteklammer 10 an dem Pneumatikträger 53 dienen.

Die Bestimmung der Federkonstanten kann beispielsweise dadurch geschehen, dass an den beiden Enden der Haltestruktur 20 Haken 60 von Federwagen eingehakt werden, wenn die zugehörige Pneumatikträgerhalteklammer 10 auf einem Blatt mit einer Bemaßung 65 aufgelegt wird.

Indem die zugehörigen Federwagen und mithin die Haken 60 auseinandergezogen werden und somit mit einer Federkraft 63 beaufschlagt werden, kann der Abstand 37 der Enden 22 unter definierter Federkraft 63 abgelesen werden, um auf diese Weise die Federkonstante, mit welcher die Enden 22 der Haltestruktur 20 öffenbar sind, zu ermitteln.

Es versteht sich, dass die Federkraft und mithin auch die Federkonstante insbesondere in dem elastischen Bereich der Haltstruktur 20, der während des Haltenden Kontakts an den Pneumatikträgem 53, mit welchen die entsprechende Pneumatikträgerhalteklammer 10 bestimmungsgemäß halten bzw. befestigend wechselwirken soll, wesentlich ist und in den geforderten Bereichen liegen sollte. In anderen Bereichen, also bei einer weiteren Spreizung oder bei einer weniger weiten Spreizung der Enden 22 voneinander, kann die Federkonstante von den vorgegebenen Werten durchaus abweichen, solange ein elastischer Bereich nicht verlassen wird.

### Bezugszeichenliste:

- 10: Pneumatikträgerhalteklammer
- 11: Innenstruktur
- 13: Hohlkörper

- 20: Haltestruktur
- 21: Haltefläche
- 22: Ende der Haltestruktur 20
- 23: Hohlkörper
- 24: Haltearm
- 25: Zwischenbereich

- 30: Klammerebene
- 31: Innenseite der Haltestruktur 20
- 32: Außenseite der Haltestruktur 20
- 33: Krümmungsradius
- 34: Breite der Haltestruktur 20
- 35: Stärke der Haltestruktur 20
- 36: Symmetrieebene der Hakenstruktur 20

- 37: Abstand der Enden 22
- 38: Zentrum der Haltestruktur 20
- 39: Winkel zwischen den Enden 22

- 40: Haken
- 41: Zentrum des Halens 40
- 44: Breite des Hakens 40
- 45: Stärke des Hakens 40

- 50: Zelt
- 51: Vorzelt
- 52: pneumatische Tragkonstruktion
- 53: Pneumatikträger
- 54: Zeltplane
- 55: Naht

- 60: Haken
- 63: Federkraft
- 65: Bemaßung

## Patentansprüche

1. Pneumatikträgerhalteklammer (10) zur Befestigung von Gegenständen an einem Pneumatikträger (53), wobei die Pneumatikträgerhalteklammer (10) eine Haltestruktur (20) umfasst, die zwei stetig gekrümmte, aufeinander zu weisende und an einer Innenseite (31) der Haltestruktur (20) angeordnete Halteflächen (21) aufweist, wobei die beiden Halteflächen (21) jeweils mit einer Komponente senkrecht zu einer Klammerebene (30) ausgerichtet sind, wobei die Krümmung beider Halteflächen (21) einen von der jeweiligen Haltefläche (21) wegweisenden Krümmungsradius (33) aufweist, wobei die Haltestruktur (20) zwei Enden (22) aufweist, die federnd gegeneinander verlagerbar sind **dadurch gekennzeichnet,**
(i) **dass** die Halteflächen (21) in entspanntem Zustand der Pneumatikträgerhalteklammer (10) einen mittleren Krümmungsradius (33) zwischen 35 mm und 70 mm aufweisen; und/oder
(ii) **dass** die beiden Enden (22) in entspanntem Zustand wenigstens 4 mm und/oder nicht mehr als 30 mm und/oder nicht mehr als 30 % des mittleren Krümmungsradius (33) der beiden Halteflächen (21) und/oder um einen in der Klammerebene (30) liegenden Winkel (39) von weniger als 50° voneinander beabstandet sind; und/oder
(iii) **dass** die Haltestruktur (20) wenigstens in einem Bereich als Hohlkörper (23) ausgeformt ist; und/oder
(iv) **dass** die Enden (22) mit einer Federkonstante D von 5 N/mm und mehr und/oder von 40 N/mm und weniger öffenbar sind; und/oder
(v) **dass** an einer Außenseite (32) der Haltestruktur (20) ein Haken (40), eine Öse, ein sonstiger Vorsprung und/oder eine Hinterschneidung angeordnet ist, welche ein flexibles Befestigen von Gegenständen an der Pneumatikträgerhalteklammer (10) ermöglicht.

2. Pneumatikträgerhalteklammer (10) nach Anspruch 1, **dadurch gekennzeichnet, dass** wenigstens eine der Halteflächen (21), vorzugsweise beide Halteflächen (21), insbesondere die Innenseite (31) der Haltestruktur (20), durchgängig stetig gekrümmt sind.

3. Pneumatikträgerhalteklammer (10) nach Anspruch 1 oder 2, **dadurch gekennzeichnet, dass** wenigstens ein Gebiet der Haltestruktur (20), vorzugsweise wenigstens ein die Halteflächen (21) tragendes Gebiet, parallel zur Klammerebene (30) dem Verlauf der zugehörigen Haltefläche (21) mit einer konstanten Breite (34) folgt, und/oder dass die Haltestruktur (20) eine konstante Breite (34) aufweist und/oder dass die Haltestruktur (20) zumindest im Bereich der Halteflächen (21) ein Breite von wenigstens 4 mm und/oder wenigstens 10 % des mittleren Krümmungsradius (33) der beiden Halteflächen (21) und/oder von nicht mehr als 10 mm und/oder nicht mehr 15 % des mittleren Krümmungsradius (33) der beiden Halteflächen (21) aufweisen.

4. Pneumatikträgerhalteklammer (10) nach einem der Ansprüche 1 bis 3, **dadurch gekennzeichnet, dass** wenigstens eine Region der Haltestruktur (20), vorzugsweise die gesamte Haltestruktur (20), eine Stärke (35) von wenigstens 8 mm und/oder wenigstens 20 % des mittleren Krümmungsradius (33) der beiden Halteflächen (21) und/oder von nicht mehr als 20 mm und/oder nicht mehr als 30 % des mittleren Krümmungsradius (33) der beiden Halteflächen (21) aufweist und/oder dass wenigstens eine Region der Haltestruktur (20), vorzugsweise die gesamte Haltestruktur (20), eine konstante Stärke aufweist.

5. Pneumatikträgerhalteklammer (10) nach einem der Ansprüche 1 bis 4, **dadurch gekennzeichnet, dass** der Haken (40) mit einer geringeren Stärke (45) als die Haltestruktur (20) an der Außenseite (32) der Haltestruktur (20) angeordnet ist und/oder dass der Haken (40) vorzugsweise ein Zentrum (41) aufweist, welches in einer senkrecht zur der Klammerebene (30) angeordneten Symmetrieebene (36) der Haltestruktur (20) angeordnet ist, und/oder asymmetrisch an Haltestruktur (20) angesetzt ist oder in diese übergeht.

6. Pneumatikträgerhalteklammer (10) nach einem der Ansprüche 1 bis 5, **dadurch gekennzeichnet, dass** die gesamte Haltestruktur (20), insbesondere die gesamte Pneumatikträgerhalteklammer (10), aus Kunststoff und/oder als Hohlkörper (13, 23) ausgeformt ist

7. Pneumatikträgerhalteklammer (10) nach einem der Ansprüche 1 bis 6, **dadurch gekennzeichnet, dass** der Hohlkörper (13, 23) über eine Innenstruktur (11) versteift ist.

8. Pneumatikträgerhalteklammer (10) nach einem der Ansprüche 1 bis 7, **dadurch gekennzeichnet, dass** die gesamte Haltestruktur (20), insbesondere die gesamte Pneumatikträgerhalteklammer (10), einstückig ausgebildet ist.

9. Pneumatikträgerhalteklammer (10) nach einem der Ansprüche 1 bis 8, **dadurch gekennzeichnet, dass** der Kunststoff ein thermoplastischer Kunststoff, vorzugsweise ein Polyester, insbesondere ein Polylactid, ist.

10. Pneumatikträgerhalteklammer (10) nach einem der Ansprüche 1 bis 9, **dadurch gekennzeichnet, dass** die Pneumatikträgerhalteklammer (10) der Befestigung von Gegenständen an einer pneumatischen Tragkonstruktion (52), insbesondere eines Zelts (50) bzw. eines Vorzelts (51), dient.
